# NEUE EUROPÄISCHE PATENTSCHRIFT

(11) **EP 2 233 708 B2**
(45) Veröffentlichungstag und Bekanntmachung des Hinweises auf die Entscheidung über den Einspruch: **18.10.2023**
(45) Hinweis auf die Patenterteilung: 27.07.2016
(21) Anmeldenummer: 10152663.0
(22) Anmeldetag: 04.02.2010
(51) Int. Cl.: F01N 3/021, F01N 3/20, F01N 13/18, F01N 3/08, F01N 3/28, B01D 46/00, F01N 13/00, F01N 1/08, F01N 13/02

(54) **Abgasbehandlungseinrichtung**
Exhaust treatment device
Dispositif de traitement des gaz d'échappement

(30) Priorität: 26.03.2009 DE 102009014435
(43) Veröffentlichungstag der Anmeldung: 29.09.2010
(73) Patentinhaber: Purem GmbH, 66539 Neunkirchen (DE)
(72) Erfinder: Werni, Marcus, 71334, Waiblingen (DE); Lehnen, Rainer, 73061, Ebersbach (DE)
(74) Vertreter: Ruttensperger Lachnit Trossin Gomoll

(56) Entgegenhaltungen:
- EP-A1- 0 112 634
- EP-A1- 0 236 817
- EP-A1- 1 353 047
- EP-A1- 1 691 045
- EP-A1- 1 701 011
- EP-A1- 2 075 426
- WO-A1-2009/019922
- DE-A1-102005 002 289
- DE-A1-102006 029 337
- DE-A1-102007 006 804
- DE-U1-202006 012 530
- US-A1- 2003 159 436

## Beschreibung

Die vorliegende Erfindung betrifft eine Abgasbehandlungseinrichtung für eine Abgasanlage einer Brennkraftmaschine, insbesondere eines Kraftfahrzeugs.

Eine derartige Abgasbehandlungseinrichtung kann zumindest ein Partikelfilter enthalten, um im Abgas mitgeführte Partikel, insbesondere Ruß, herauszufiltern. Die herausgefilterten Partikel werden dabei in einem Partikelfilterelement des Partikelfilters eingelagert. Mit zunehmender Beladung sinkt die Speicherfähigkeit des Partikelfilters, während gleichzeitig sein Durchströmungswiderstand zunimmt. Dementsprechend werden Regenerationen durchgeführt, bei denen die Partikelbeladung abgebrannt wird. Da sich im Partikelfilter auch nicht abbrennbare Partikel einlagern, kommt es trotz Regenerationen allmählich zu einem Zusetzen des Partikelfilters, was dessen Speicherfähigkeit reduziert und dessen Durchströmungswiderstand erhöht. Über die vorgesehene Laufzeit einer Brennkraftmaschine kann es daher erforderlich sein, das Partikelfilter zu warten bzw. auszutauschen. Unerwünscht ist dabei, die komplette Abgasbehandlungseinrichtung auszutauschen. Vielmehr ist erwünscht, die Abgasbehandlungseinrichtung so auszugestalten, dass das Partikelfilter oder zumindest das jeweilige Partikelfilterelement mit möglichst geringem Aufwand zugänglich gemacht und ausgetauscht werden kann. Hierzu ist es üblich, ein Gehäuse der Abgasbehandlungseinrichtung so auszugestalten, dass es geöffnet werden kann. Zu diesem Zweck lassen sich zum Beispiel einzelne Bestandteile des Gehäuses lösbar aneinander befestigen. Denkbar sind beispielsweise Flanschbefestigungen, die jedoch ein erhöhtes Gewicht sowie einen vergleichsweise hohen Herstellungsaufwand bedeuten. Steckverbindungen scheiden quasi aus, da diese nach einer langen Verbindungszeit nicht mehr oder nur noch sehr schwer lösbar sind. Am besten scheinen sich Schellenverbindungen zu eignen.

Aus der EP 1 691 045 A1 ist eine Abgasbehandlungseinrichtung bekannt, bei der ein zylindrisches Gehäuse vorgesehen ist, das sich durch einen seitlich umlaufenden Mantel und zwei axial endseitige Endböden auszeichnet.

Aus der EP 0 112 634 A1 ist ebenfalls ein zylindrisches Gehäuse mit einem seitlich umlaufenden, doppelwandigen Gehäusemantel bekannt, an dessen axiale Enden ein Einlasstrichter und ein Auslasstrichter angebaut sind. Der insoweit rohrförmige Mantel enthält ein Partikelfilter, dessen Partikelfilterelement in einem eigenen Partikelfiltermantel mittels einer Lagermatte fixiert ist. Der Partikelfiltermantel besitzt an einem Ende einen umlaufenden Kragen, der in eine Flanschverbindung eingebunden ist, die den Gehäusemantel mit dem Auslasstrichter vebindet.

Aus der EP 2 075 426 A1 ist eine Abgasbehandlungseinrichtung bekannt, bei der ein Partikelfilter und ein Oxidationskatalysator hintereinander angeordnet sind. Das Partikelfilter umfasst ein Partikelfilterlement, das mittels einer Lagermatte in einem Partikelfiltermantel fixiert ist. Der stromauf des Partikelfilters angeordnete Oxidationskatalysator umfasst ein Oxidationskatalysatorelement, das mittels einer Lagermatte in einem Oxidationskatalysatormantel fixiert ist. Ein Austrittsende des Oxidationskatalysatormantels und ein Eintrittsende des Partikelfiltermantels sind mittels einer Schellenverbindung aneinander befestigt. Ferner ist der Partikelfiltermantel an seinem Austrittsende mittels einer weiteren Schellenverbindung an einem Verbindungsrohr befestigt, das einen Boden der Einrichtung durchdringt und mit einer externen Umlenkkammer verbunden ist. Die externe Umlenkkammer trägt einen Injektor und ist außerdem mit einem Mischrohr verbunden, das ebenfalls den Boden durchdringt und zu einer internen Umlenkkammer führt.

Die vorliegende Erfindung beschäftigt sich mit dem Problem, für eine Abgasbehandlungseinrichtung der eingangs genannten Art eine verbesserte Ausführungsform anzugeben, die sich insbesondere durch eine einfache Handhabung zum Wechseln des Partikelfilters auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in das Gehäuse der Abgasbehandlungseinrichtung zumindest ein Aufnahmerohr so einzubauen, dass es einen Endboden des insbesondere tonnenförmigen Gehäuses durchsetzt. In der Folge kann ein Partikelfilter, der seinerseits einen Mantel aufweist, in dem wenigstens ein Partikelfilterelement mittels einer Lagermatte umhüllt und lagepositioniert ist, axial in das Aufnahmerohr eingesetzt werden, ohne dass das Gehäuse selbst geöffnet werden muss. Zusätzlich wird die Abgasbehandlungseinrichtung mit einem Umlenkgehäuse ausgestattet, das im montierten Zustand die aus dem Partikelfilter bzw. aus dem Aufnahmerohr austretende Abgasströmung in einer darin enthaltenden Umlenkkammer zu einem Einlass des Gehäuses umlenkt, der ebenfalls den genannten Endboden des Gehäuses durchsetzt. Auf diese Weise kann das Abgas durch das externe Umlenkgehäuse aus dem eigentlichen Gehäuse der Abgasbehandlungseinrichtung ausgeführt, umgelenkt und wieder eingeführt werden. Im Inneren des Gehäuses der Abgasbehandlungseinrichtung kann sich dann optional eine weitere Behandlung der Abgase anschließen. Das genannte Umlenkgehäuse ist mittels wenigstens einer Befestigungseinrichtung lösbar an das Gehäuse angebaut, wobei die jeweilige Befestigungseinrichtung zumindest einen Einlass des Umlenkgehäuses mit einem Auslassende des Aufnahmerohrs lösbar verbindet.

Die vorgeschlagene Bauweise schafft eine ausreichende Zugänglichkeit zum Partikelfilter für Wartungszwecke, ohne dass hierzu das Gehäuse selbst geöffnet werden muss. Das lösbare Anbauen eines derartigen Umlenkgehäuses gestaltet sich vergleichsweise einfach und kostengünstig.

Entsprechend einer vorteilhaften Ausführungsform kann ein auslassseitiger Endabschnitt des Partikelfilters, der dem Umlenkgehäuse zugewandt ist, so ausgestaltet sein, dass er in die Befestigungseinrichtung, die zum lösbaren Befestigen des Einlasses des Umlenkgehäuses am Auslassende des Aufnahmerohrs vorgesehen ist, so eingebunden werden kann, dass sich dadurch eine axiale Festlegung des Partikelfilters am Aufnahmerohr bzw. am Einlass des Umlenkgehäuses ergibt. Mit anderen Worten, die Befestigungseinrichtung, die zum Befestigen des Umlenkgehäuses am Gehäuse der Abgasbehandlungseinrichtung dient, erfüllt eine Doppelfunktion, da mit ihr gleichzeitig das in das Aufnahmerohr eingesetzte Partikelfilter axial fixiert wird. Hierdurch erleichtert sich die Montage und Demontage bzw. das Wechseln des Partikelfilters, da keine separate zusätzliche Befestigungseinrichtung betätigt werden muss, die zum separaten Fixieren des Partikelfilters vorgesehen sein könnte.

Entsprechend einer anderen vorteilhaften Ausführungsform kann ein einlassseitiger Endabschnitt des Partikelfilters, der vom Umlenkgehäuse abgewandt ist, axial verschiebbar am Aufnahmerohr radial abgestützt sein. Hierdurch kann das Partikelfilter im Bereich seines einlassseitigen Endabschnitts Relativbewegungen bezüglich des Aufnahmerohrs durchführen. Dies ist insbesondere im Hinblick auf thermische Dehnungseffekte von erhöhter Bedeutung. Im Bereich des einlassseitigen Endabschnitts führt die axial verschiebbare Abstützung zu einem Loslager des Partikelfilters im bzw. am Aufnahmerohr, während die am einlassseitigen Endabschnitt des Partikelfilters vorgesehene axiale Fixierung quasi ein Festlager zwischen Partikelfilter und Aufnahmerohr bildet. Diese Kombination ergibt eine sichere und stabile Abstützung bzw. Lagefixierung des Partikelfilters im Aufnahmerohr und ist außerdem weitgehend frei von thermischen Spannungen.

Erfindungsgemäß ist außerdem vorgesehen, das Aufnahmerohr durch eine auslassseitige Verlängerung eines Mantels eines Oxidationskatalysators zu bilden, der stromauf des Partikelfilters im Gehäuse der Abgasbehandlungseinrichtung angeordnet ist. Besagter Mantel nimmt außerdem zumindest ein Oxidationskatalysatorelement auf. Somit erhält besagter Mantel des Oxidationskatalysators eine Doppelfunktion, da er einerseits das jeweilige Oxidationskatalysatorelement aufnimmt, während er andererseits das Aufnahmerohr zur Aufnahme des Partikelfilters bildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine axiale Ansicht einer Abgasbehandlungseinrichtung mit Umlenkgehäuse,
- Fig. 2: eine axiale Ansicht eines Umlenkgehäuses einer anderen Ausführungsform,
- Fig. 3: einen Längsschnitt der Abgasbehandlungseinrichtung entsprechend Schnittlinien III in Fig. 1,
- Fig. 4-7: vergrößerte Ansichten eines Details IV in Fig. 3,
- Fig. 8-13: vergrößerte Ansichten eines Details VIII aus Fig. 3,
- Fig. 14-16: Seitenansichten der Abgasbehandlungseinrichtung im Bereich des Umlenkgehäuses bei unterschiedlichen Ausführungsformen,
- Fig. 17: einen Längsschnitt der Abgasbehandlungseinrichtung entsprechend Schnittlinien XVII in Fig. 1,
- Fig. 18-23: Schnittansichten wie in Fig. 17, jedoch bei unterschiedlichen Ausführungsformen eines Mischgehäuses,
- Fig. 24-29: axiale Ansichten des Mischgehäuses entsprechend den Ausführungsformen der Fig. 18-23,
- Fig. 30: eine weitere Schnittansicht wie in den Fig. 17-23 zur Veranschaulichung verschiedener Einbaupositionen einer Zumesseinrichtung.

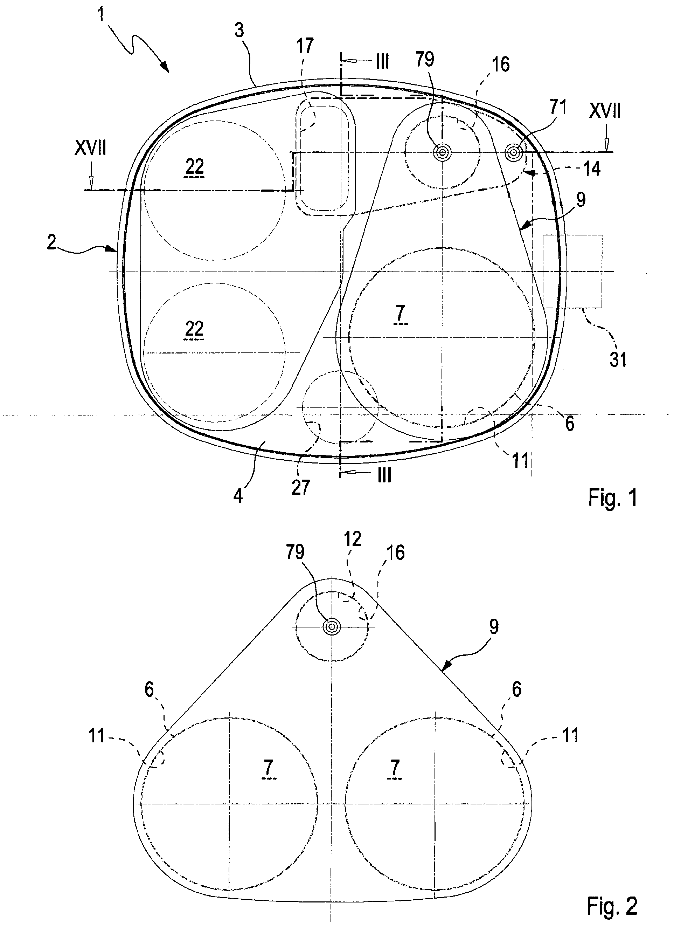

Entsprechend Fig. 1 kann eine Abgasbehandlungseinrichtung 1, die zur Verwendung in einer Abgasanlage einer Brennkraftmaschine, insbesondere eines Kraftfahrzeugs, vorgesehen ist, ein Gehäuse 2 aufweisen, das einen seitlich umlaufenden Mantel 3 sowie zwei endseitige Böden oder Endböden 4, 5 aufweist, von denen in Fig. 1 dem Betrachter nur der eine bzw. erste Endboden 4 zugewandt ist. Der andere bzw. zweite Endboden 5 ist am vom ersten Endboden 4 entfernten Ende des Gehäuses 2 angeordnet.

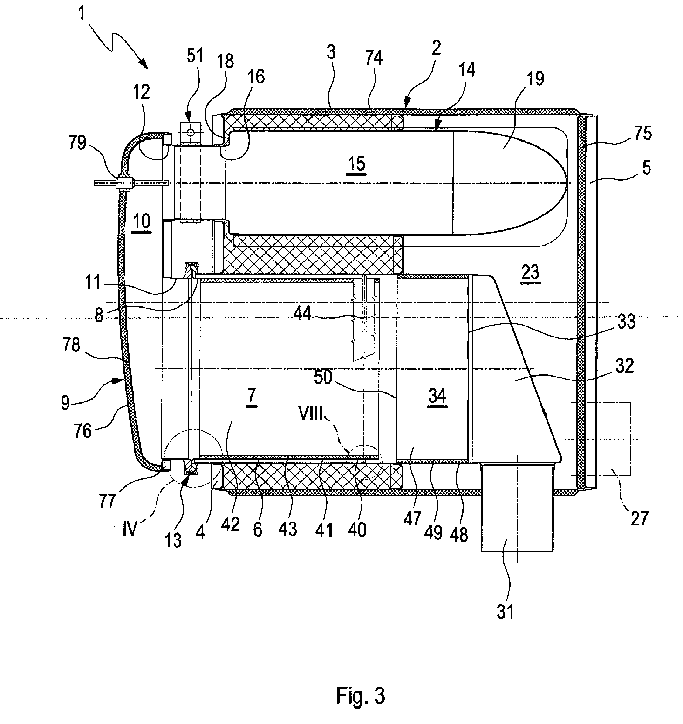

Entsprechend den Fig. 1-3 ist die Abgasbehandlungseinrichtung 1 zweckmäßig mit wenigstens einem Aufnahmerohr 6 ausgestattet. Bei der in den Fig. 1 und 3 gezeigten Ausführungsform ist genau ein solches Aufnahmerohr 6 vorgesehen. Rein exemplarisch zeigt Fig. 2 eine Ausführungsform mit zwei derartigen Aufnahmerohren 6. Das jeweilige Aufnahmerohr 6 durchdringt den ersten Endboden 4 axial. Ferner nimmt das jeweilige Aufnahmerohr 6 ein Partikelfilter 7 auf. Hierzu ist das jeweilige Partikelfilter 7 in ein den ersten Endboden 4 durchdringendes Auslassende 8 des Aufnahmerohrs 6 axial und von außen, also von einer vom Inneren 23 des Gehäuses 2 abgewandten Seite eingesteckt. Das Partikelfilter 7 ist dabei koaxial zum Aufnahmerohr 6 angeordnet.

Im Beispiel ist außerdem ein Umlenkgehäuse 9 vorgesehen. Dieses enthält entsprechend Fig. 3 eine Umlenkkammer 10. Ferner weist das Umlenkgehäuse 9 zumindest einen mit der Umlenkkammer 10 kommunizierenden Einlass 11 sowie zumindest einen mit der Umlenkkammer 10 kommunizierenden Auslass 12 auf. Das Umlenkgehäuse 9 ist an das Gehäuse 2 der Abgasbehandlungseinrichtung 1, das im Folgenden auch als Hauptgehäuse 2 bezeichnet werden kann, angebaut. Hierzu kommt zumindest eine Befestigungseinrichtung 13 zum Einsatz, die ein lösbares Befestigen des jeweiligen Einlasses 11 des Umlenkgehäuses 9 am jeweiligen Auslassende 8 des jeweiligen Aufnahmerohrs 6 ermöglicht.

Zusätzlich oder alternativ kann die hier gezeigte Abgasbehandlungseinrichtung 1 außerdem ein Mischgehäuse 14 aufweisen, das im Hauptgehäuse 2 angeordnet ist. Das Mischgehäuse 14 enthält eine Mischkammer 15 und besitzt einen Einlass 16, der mit der Mischkammer 15 kommuniziert, sowie einen Auslass 17, der ebenfalls mit der Mischkammer 15 kommuniziert. Sowohl der Einlass 16 als auch der Auslass 17 durchsetzen den ersten Endboden 4 des Hauptgehäuses 2. Erkennbar ist bei den hier gezeigten Ausführungsformen die Mischkammer 14 nur im Bereich einer dem ersten Boden 4 zugewandten Stirnseite 18 in körperlichem Kontakt mit dem Hauptgehäuse 2, während es im Übrigen vom Hauptgehäuse 2, also insbesondere vom Mantel 3 und vom zweiten Endboden 5 beabstandet ist. Die Dimensionierung des Mischgehäuses 14 ist zweckmäßig so an die Dimensionierung des Hauptgehäuses 2 angepasst, dass ein in der Mischkammer 15 vom Einlass 16 entfernter Umlenkbereich 19 vom ersten Endboden 4 weiter entfernt ist als vom zweiten Endboden 5. Mit anderen Worten, das Mischgehäuse 14 erstreckt sich vom ersten Endboden 4 bis zum zweiten Endboden 5, jedoch vorzugsweise ohne diesen zu berühren. Hierdurch erhält die Mischkammer 15 eine vergleichsweise große Länge in axialer Richtung des, insbesondere zylindrischen oder tonnenförmigen, Hauptgehäuses 2.

Der Auslass 17 des Mischgehäuses 14 mündet in eine Umlenkkammer 20 ein, die im Folgenden auch als weitere Umlenkkammer 20 bezeichnet werden kann. In diese weitere Umlenkkammer 20 mündet ferner zumindest ein Einlass 21 wenigstens eines SCR-Katalysators 22 ein. Der jeweilige Einlass 21 des SCR-Katalysators 22 durchdringt dabei ebenfalls den ersten Endboden 4. Der jeweilige SCR-Katalysator 22 erstreckt sich im Übrigen im Inneren 23 des Hauptgehäuses 2. Entsprechend Fig. 1 weist die Abgasbehandlungseinrichtung 1 im Beispiel zwei derartige SCR-Katalysatoren 22 auf. Es ist klar, dass es ebenso mehr oder weniger SCR-Katalysatoren 22 sein können. Die beiden SCR-Katalysatoren 22 sind parallel durchströmt und münden auslassseitig über jeweils einen entsprechenden Auslass 24 in das Innere 23 bzw. in eine Beruhigungskammer 25 des Hauptgehäuses 2 ein, die im Inneren 23 ausgebildet ist. Rein exemplarisch besitzt der SCR-Katalysator 22 im Beispiel zwei hintereinander angeordnete, also in Reihe durchströmbare SCR-Katalysatorelemente 26.

Das Hauptgehäuse 2 weist in üblicher Weise einen Auslassanschluss 27 auf, der zum Beispiel mit der Beruhigungskammer 25 kommuniziert. Im Hauptgehäuse 2 kann außerdem ein Zwischenboden 28 angeordnet sein, der im Inneren 23 die Beruhigungskammer 25 von einer Absorptionskammer 29 trennt, die im Beispiel mit einem schallabsorbierenden Material 30 gefüllt sein kann. Der Zwischenboden 28 ist für Luftschall durchlässig ausgestaltet. Beispielsweise besitzt er eine entsprechende Perforation. Darüber hinaus können weitere Schalldämpfungsmaßnahmen in der Abgasbehandlungseinrichtung 1 vorgesehen sein.

Das Hauptgehäuse 2 ist ferner mit einem Einlassanschluss 31 ausgestattet, der entsprechend Fig. 3 im Inneren 23 über eine Umlenkschale 32 an einen Einlass 33 eines Oxidationskatalysators 34 angeschlossen ist. Der Oxidationskatalysator 34 ist stromauf des Partikelfilters 7 angeordnet. Sofern mehrere Partikelfilter 7 im Hauptgehäuse 2 untergebracht sind, sind auch entsprechende viele Oxidationskatalysatoren 34 vorgesehen, die über einen gemeinsamen Einlassanschluss 31 oder über separate Einlassanschlüsse 31 mit Abgas beaufschlagt werden. Ebenso ist es möglich für mehrere Partikelfilter 7 einen gemeinsamen Oxidationskatalysator 34 vorzusehen.

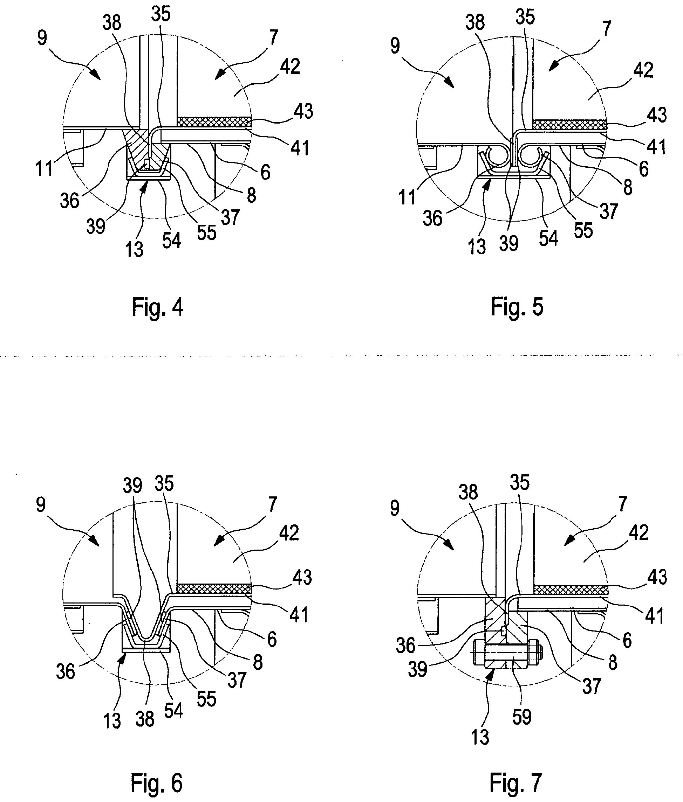

Mit Bezug auf die Fig. 4-7 wird im Folgenden auf eine bevorzugte Ausführungsform bzw. auf zugehörige Varianten näher eingegangen. Dementsprechend besitzt das Partikelfilter 7 einen dem Umlenkgehäuse 9 zugewandten auslassseitigen Endabschnitt 35, der zweckmäßig so konfiguriert ist, dass er in die Befestigungseinrichtung 13 eingebunden werden kann. Dabei ist besagter Endabschnitt 35 so in die Befestigungseinrichtung 13 eingebunden, dass sich dadurch ein a-xiales Festlegen des Partikelfilters 7 am Aufnahmerohr 6 bzw. am Einlass 11 des Umlenkgehäuses 9 und somit auch ein axiales Festlegen des Partikelfilters 7 am Umlenkgehäuse 9 ausbildet. Durch Lösen der Befestigungseinrichtung 13 ist auch die axiale Festlegung des Partikelfilters 7 aufgehoben, so dass das Partikelfilter 7 aus dem Aufnahmerohr 6 axial herausziehbar ist, wenn das Umlenkgehäuse 9 entfernt ist. Durch Montieren des Umlenkgehäuses 9 und durch Befestigen des Umlenkgehäuses 9 am Hauptgehäuse 2 wird mit Hilfe der Befestigungseinrichtung 13 gleichzeitig auch das jeweilige Partikelfilter 7 in der dafür vorgesehenen Relativlage festgelegt.

Bei den Ausführungsformen der Fig. 4-6 ist die Befestigungseinrichtung 13 als Schellenverbindung ausgestaltet. Im Unterschied dazu zeigt Fig. 7 eine als geschraubte Flanschverbindung ausgestaltete Befestigungseinrichtung 13. Entsprechend den Fig. 4-7 umfasst die jeweilige Befestigungseinrichtung 13 einen ersten Befestigungsflansch 36, der am freien Ende des jeweiligen Einlasses 11 ausgebildet ist. Ferner umfasst die Befestigungseinrichtung 13 einen zweiten Befestigungsflansch 37, der am freien Auslassende 8 des jeweiligen Aufnahmerohrs 6 ausgebildet ist. Der auslassseitige Endabschnitt 35 des Partikelfilters 7 weist nun einen Bund 38 auf, der nach außen absteht und dabei segmentweise oder bevorzugt vollständig umlaufend ausgestaltet ist. Im gezeigten montierten Zustand ist dieser Bund 38 axial zwischen den Befestigungsflanschen 36, 37 der Befestigungseinrichtung 13 angeordnet. Zweckmäßig ist dabei die Befestigungseinrichtung 13 so konfiguriert, dass sie eine axiale Verspannung des Bunds 38 zwischen den Befestigungsflanschen 36, 37 ermöglicht.

Die jeweilige Befestigungseinrichtung 13 kann mit wenigstens einer Dichtung 39 ausgestattet sein, um die Gasdichtigkeit der hergestellten Verbindung zu verbessern. Im Beispiel der Fig. 4 und 7 ist jeweils genau eine solche Dichtung 39 vorgesehen, die unmittelbar an beiden Befestigungsflanschen 36, 37 axial anliegt. In diesen Fällen liegt der Bund 38 unmittelbar an den Befestigungsflanschen 36, 37 an. Im Unterschied dazu sind bei den Ausführungsformen der Fig. 5 und 6 zwei derartige Dichtungen 39 vorgesehen, wobei die Befestigungsflansche 36, 37 jeweils über eine dieser Dichtungen 39 an voneinander abgewandten Seiten am Bund 38 axial abgestützt sind. Besonders zweckmäßig ist eine Ausführungsform, bei welcher die Dichtungen 39 am Bund 38 befestigt sind, zum Beispiel durch Ankleben oder Anvulkanisieren. Durch Wechseln des Partikelfilters 7 kann dann automatisch auch die jeweilige Dichtung 39 erneuert werden. Außerdem vereinfacht sich die Montage.

Um das Partikelfilter 7 vereinfacht auswechseln zu können, ist es zweckmäßig mit einem Mantel 41 ausgestattet, der rohrförmig konzipiert ist und der zumindest ein Partikelfilterelement 42 aufnimmt. Das Partikelfilterelement 42 ist dabei in üblicher Weise mittels einer Lagermatte 43 umhüllt und damit im Mantel 41 lagepositioniert. Zweckmäßig ist der zuvor genannte Bund 38 integral an diesem Mantel 41 des Partikelfilters 7 ausgeformt.

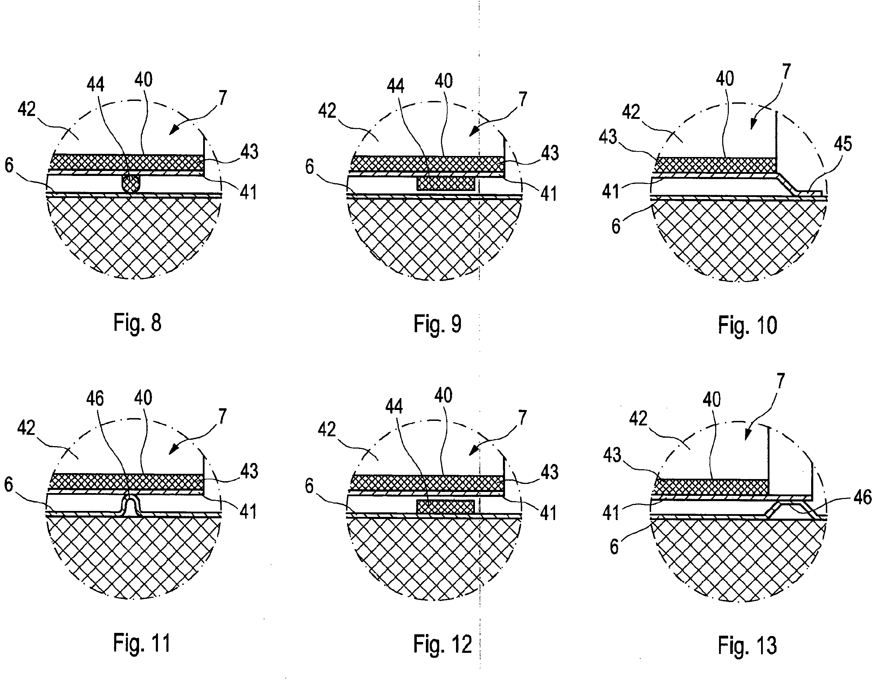

Entsprechend Fig. 3 kann ein vom Umlenkgehäuse 9 entfernter einlassseitiger Endabschnitt 40 des Partikelfilters 7 am Aufnahmerohr 6 so radial abgestützt sein, dass besagter Endabschnitt 40 relativ zum Aufnahmerohr 6 axial verschiebbar ist. Diese axiale Verschiebbarkeit des einlassseitigen Endabschnitts 40 kann auf unterschiedliche Weise realisiert werden. In den Fig. 8-13 sind mehrere alternative Lösungen exemplarisch dargestellt. Beispielsweise kann entsprechend Fig. 8 am Partikelfilter 7 bzw. an dessen Mantel 41 ein ringförmiger oder ringsegmentförmiger Lagerkörper 44 befestigt sein, der am Aufnahmerohr 6 abgleiten kann.

Entsprechend den Fig. 9 und 12 kann der Lagerkörper 44 elastisch ausgestaltet sein und beispielsweise durch ein vollständig umlaufendes oder segmentweise umlaufendes Band oder Kissen aus Drahtgestrick oder Lagermattenmaterial gebildet sein. Dieser elastische Lagerkörper 44 kann entsprechend Fig. 9 am Partikelfilter 7 bzw. an dessen Mantel 41 befestigt sein und am Aufnahmerohr 6 abgleiten. Ebenso ist es möglich, entsprechend Fig. 12 einen derartigen elastischen Lagerkörper 44 fest am Aufnahmerohr 6 anzubringen, so dass das Partikelfilter 7 bzw. dessen Mantel 41 daran abgleiten kann.

Bei den Ausführungsformen der Fig. 10, 11 und 13 wird kein separater Lagerkörper 14 verwendet, vielmehr wird eine die Lagerung ermöglichende Kontur unmittelbar am Partikelfilter 7 bzw. an dessen Mantel 41 entsprechend Fig. 10 oder unmittelbar am Aufnahmerohr 6 entsprechend den Fig. 11 und 13 ausgeformt. Beispielsweise zeigt Fig. 10 eine Querschnittsaufweitung 45, die unmittelbar am Mantel 41 des Partikelfilters 7 ausgeformt ist und die vollständig umlaufend oder segmentweise umlaufend konfiguriert sein kann. Erkennbar stützt sich diese Querschnittsaufweitung 45 unmittelbar am Aufnahmerohr 6 ab. Im Unterschied dazu ist bei den Ausführungsformen der Fig. 11 und 13 eine am Aufnahmerohr 6 ausgeformte Querschnittsverengung 46 vorgesehen, die so dimensioniert ist, dass es zu einer direkten radialen Kontaktierung mit dem Partikelfilter 7 bzw. mit dessen Mantel 41 kommt. Auch diese Querschnittsverengung 46 kann sich in Umfangsrichtung vollständig umlaufend oder segmentweise umlaufend erstrecken. Beispielsweise deutet die in Fig. 11 gezeigte linienförmige Abstützung eine ringförmig umlaufende Querschnittsverengung 46 an, während die in Fig. 13 gezeigte flächige Abstützung eine punktweise bzw. segmentweise umlaufende Querschnittsverengung 46 andeutet, die mehrere, in Umfangsrichtung beabstandet angeordnete Kontaktbereiche besitzt.

Fig. 3 zeigt eine weitere Besonderheit der hier vorgestellten Abgasbehandlungseinrichtung 1. Der Oxidationskatalysator 34 umfasst im Beispiel ein Oxidationskatalysatorelement 47, das in einem rohrförmigen Mantel 48 angeordnet ist und mittels einer entsprechenden Lagermatte 49 im zugehörigen Mantel 48 positioniert ist. Der Mantel 48 des Oxidationskatalysators 34 ist an einer Auslassseite 50 des Oxidationskatalysators 34 axial verlängert. Diese axiale auslassseitige Verlängerung des Mantels 48 des Oxidationskatalysators 34 bildet bei den hier gezeigten Ausführungsformen das Aufnahmerohr 6. Hierdurch ergibt sich eine extreme Vereinfachung und Gewichtsersparnis bei der Realisierung der einfachen Austauschbarkeit des Partikelfilters 7.

Entsprechend Fig. 3 sind der Auslass 12 des Umlenkgehäuses 9 und der Einlass 16 des Mischgehäuses 14 miteinander kommunizierend verbunden. Dabei soll auch für diese Verbindung eine Befestigungseinrichtung 51 verwendet werden, die es ermöglicht, den Auslass 12 und den Einlass 16 lösbar aneinander zu befestigen. Bei dieser weiteren Befestigungseinrichtung 51 kann es sich grundsätzlich um die gleiche Bauart der zuvor genannten Befestigungseinrichtung 13 handeln. Somit handelt es sich auch hier bevorzugt um eine Schellenverbindung bzw. um eine geschraubte Flanschverbindung.

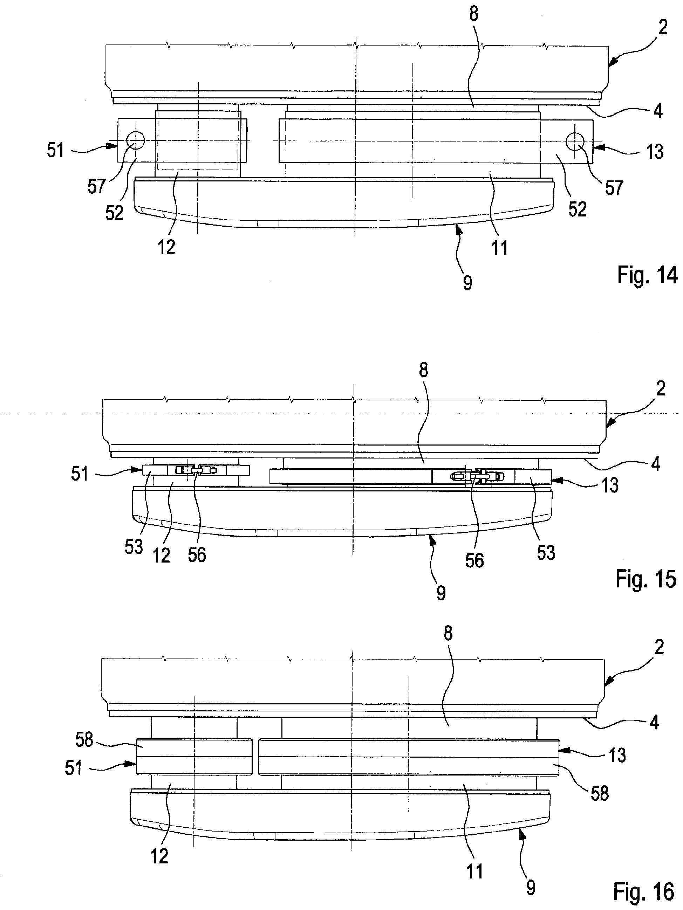

Die Fig. 14-16 zeigen unterschiedliche Ausführungsformen. Die Fig. 14 und 15 zeigen jeweils eine Schellenverbindung, wobei die jeweilige Schelle 52 als Flachschelle 52 konzipiert ist, die nur eine radiale Verpressung der koaxial ineinander gesteckten Rohrabschnitte bewirkt, nämlich einerseits zwischen Auslass 8 des Aufnahmerohrs 6 und Einlass 11 des Umlenkgehäuses 9 und andererseits zwischen dem Auslass 12 des Umlenkgehäuses 9 und dem Einlass 16 des Mischgehäuses 14. Bevorzugt wird eine Ausgestaltung entsprechend Fig. 15, bei der die jeweilige Schellenverbindung 13, 51 als V-Schelle 53 ausgestaltet ist. Eine derartige V-Schelle 53 kann entsprechend den Fig. 4-6 mit einem umlaufenden Spannband 54 sowie mit einem V-Profil 55 ausgestattet sein, wodurch mit Hilfe einer derartigen V-Schelle 53, die auch als V-Bandschelle bezeichnet werden kann, eine axiale Verpressung der Befestigungsflansche 36, 37 erreicht werden kann. In Fig. 15 sind Spanneinrichtungen 56 angedeutet, die in üblicher Weise ein Spannen der jeweiligen Schelle 53 ermöglichen. Im Unterschied dazu zeigt Fig. 14 bei der jeweiligen Schelle 52 lediglich einen Bereich 57, der zum Anordnen einer geeigneten Spannvorrichtung vorgesehen ist.

Schließlich zeigt Fig. 16 eine Ausführungsform, bei welcher die jeweilige Befestigungseinrichtung 13, 51 als geschraubte Flanschverbindung 58 ausgestaltet ist. Entsprechende Schrauben 59 sind in Fig. 7 erkennbar. Aus den Fig. 14-16 lässt sich entnehmen, dass die mit den V-Schellen 53 arbeitenden Befestigungseinrichtungen 13, 51 in axialer Richtung besonders kompakt bauen. Fig. 3 deutet an, dass die beiden Befestigungseinrichtungen 13, 51 nicht zwangsläufig identisch konfiguriert sein müssen. So ist die dem Partikelfilter 7 zugeordnete Befestigungseinrichtung 13 als V-Schelle 53 konzipiert, während die dem Mischgehäuse 14 zugeordnete Befestigungseinrichtung 51 hier exemplarisch als Flachschelle 52 konzipiert ist.

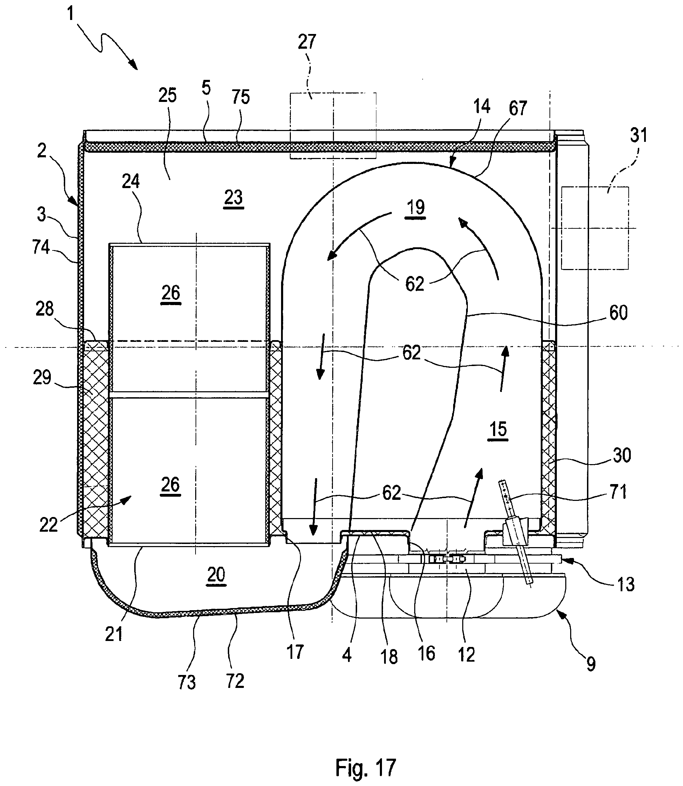

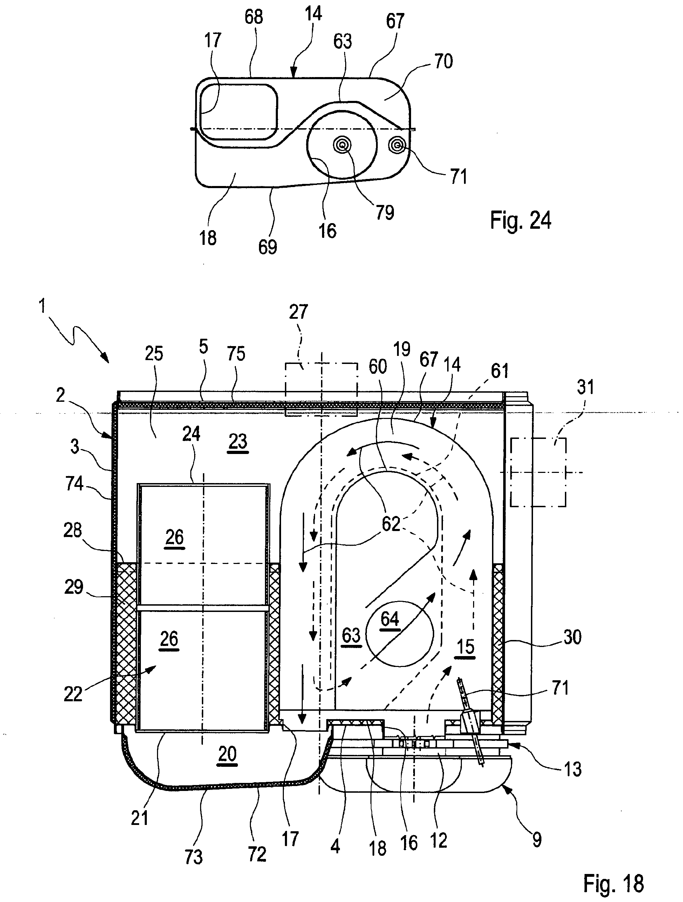

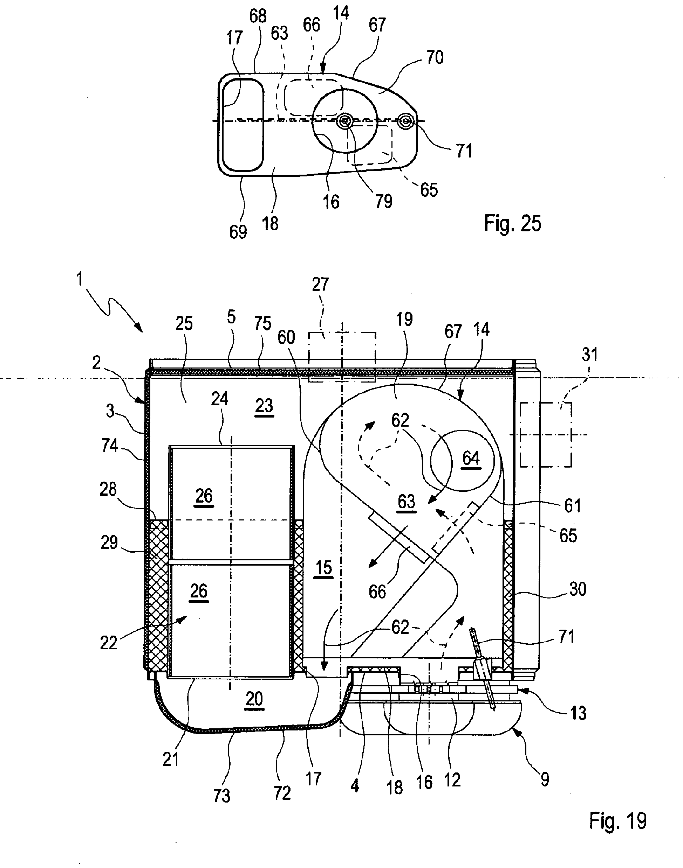

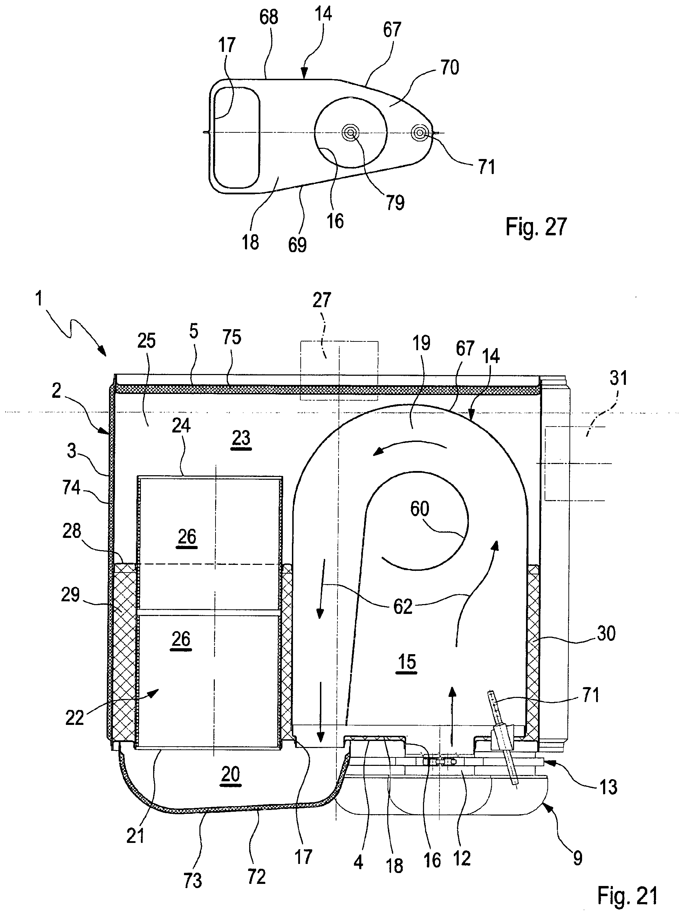

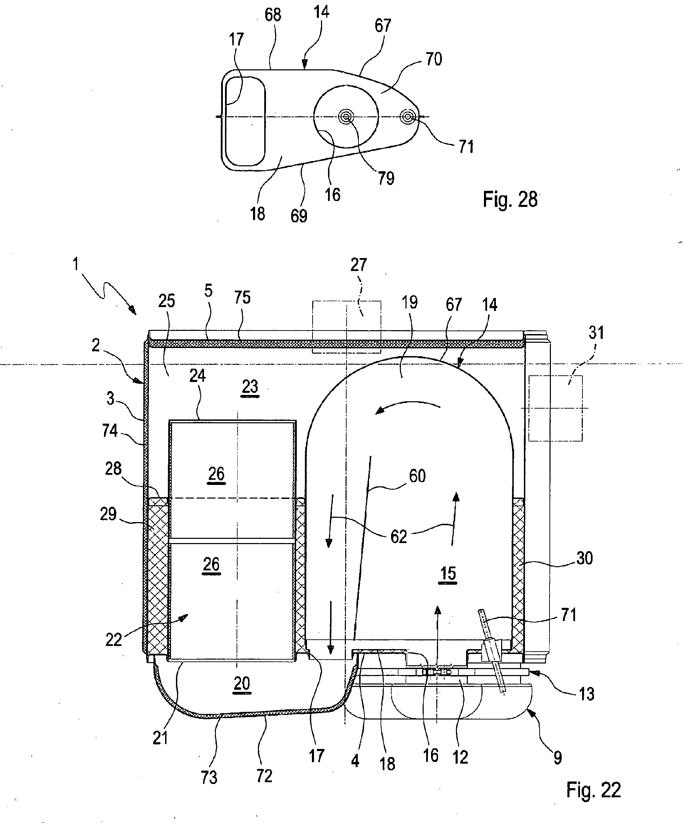

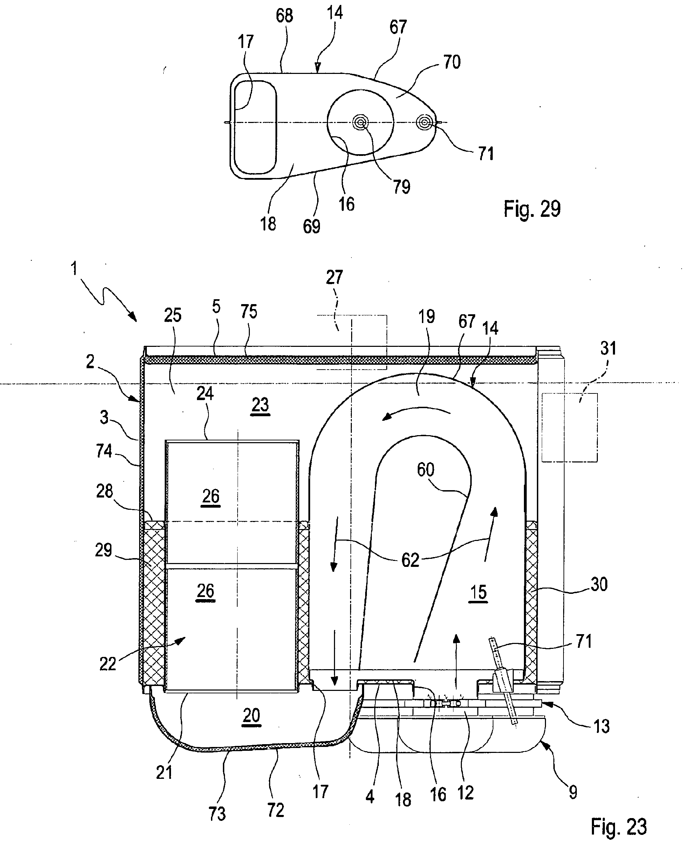

Entsprechend den Fig. 17-23 und teilweise entsprechend den Fig. 24-29 kann im Mischgehäuse 14 zumindest eine Führungswand 60 angeordnet sein. Die Ausführungsformen der Fig. 17 und 20-23 zeigen jeweils nur eine einzige Führungswand 60, während die Ausführungsformen der Fig. 18 und 19 zusätzlich eine weitere Führungswand 61 aufweisen. Die jeweilige Führungswand 60, 61 bildet innerhalb der Mischkammer 15 eine Mischstrecke 62 aus, die in den Fig. 17-23 durch Pfeile angedeutet ist. Es sind jedoch auch einfache Ausführungsformen denkbar, die ohne Führungswand 60, 61 auskommen.

Bei den Ausführungsformen der Fig. 18 und 19 ist im Mischgehäuse 14 außerdem eine Zwischenwand 63 angeordnet, die in den zugehörigen Seitenansichten der Fig. 24 bzw. 25 besser erkennbar ist. Die jeweilige Zwischenwand 63 trennt innerhalb der Mischkammer 15 zwei Ebenen voneinander. Die Mischstrecke 62 erstreckt sich durch beide Ebenen. Zur Veranschaulichung ist ein Abschnitt der Mischstrecke 62, der sich in der vom Betrachter abgewandten Ebene erstreckt, mit unterbrochenen Pfeilen dargestellt, während ein Abschnitt der Mischstrecke 62, der sich in der dem Betrachter zugewandten Ebene befindet, mit durchgezogenen Pfeilen angedeutet ist. Erkennbar lassen sich vergleichsweise komplexe Mischstrecken 62 realisieren. In jedem Fall wird die Abgasströmung durch das Mischgehäuse 14 so hindurchgeführt, dass sich zumindest eine Umlenkung von 180° zwischen einer Strömungsrichtung am Einlass 16 und einer Strömungsrichtung am Auslass 17 einstellt. Bei den Ausführungsformen der Fig. 18 und 19 wird sogar ohne weiteres eine Strömungsumlenkung von mehr als 180° erreicht. In der Ausführungsform der Fig. 18 wird die Abgasströmung dreimal um 180° umgelenkt, also insgesamt um etwa 540°. Bei der Ausführungsform der Fig. 19 erfolgt eine Strömungsumlenkung um wenigstens 360° oder zumindest 450°.

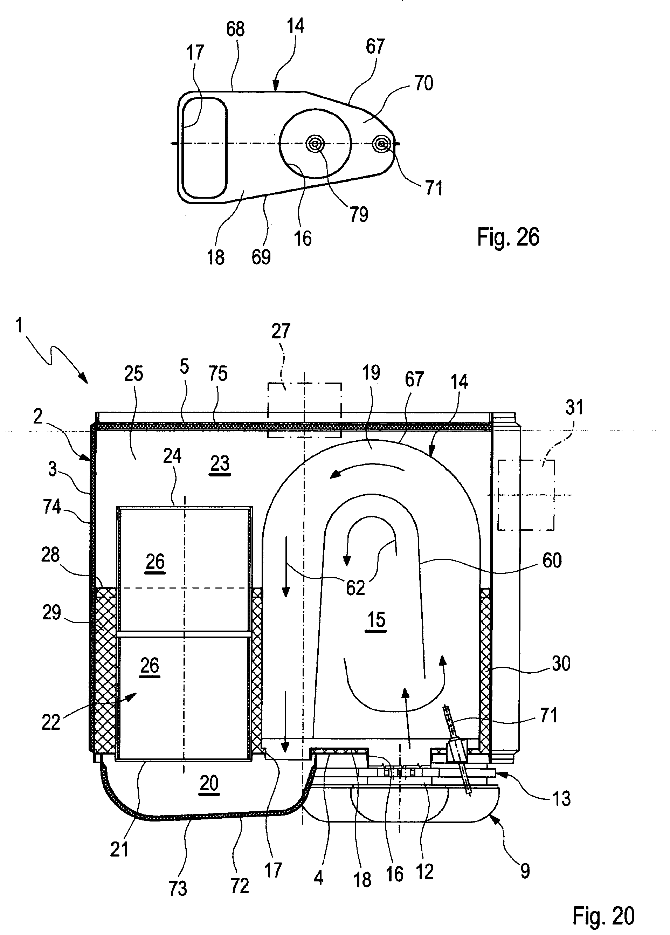

Auch die in Fig. 20 gezeigte Konfiguration, die ohne Zwischenwand 63 auskommt, führt zu einer Strömungsumlenkung von etwa 540°.

Die in den Ausführungsformen der Fig. 18 und 19 gezeigte Zwischenwand 63 besitzt zumindest eine Durchtrittsöffnung 64, durch die das Abgas entlang der Mischstrecke 62 von der einen Ebene zur anderen Ebene gelangt. Das Mischgehäuse 14 ist dabei zweckmäßig so konzipiert, dass der Einlass 16 mit der einen Ebene kommuniziert, während der Auslass 17 mit der anderen Ebene kommunizierend verbunden ist. Bei der in Fig. 19 gezeigten Ausführungsform sind die beiden Führungswände 60, 61 jeweils mit einer Verbindungsöffnung 65 bzw. 66 ausgestattet. Bei diesen Ausführungsformen sind die Führungswände 60, 61 innerhalb der Mischkammer 15 so angeordnet, dass sie die Mischstrecke 62 in mehrere Sektoren unterteilen. Die zuvor genannten Verbindungsöffnungen 65, 66 ermöglichen nun eine kommunizierende Verbindung aufeinanderfolgender Sektoren. Hierdurch kann die Strömungsführung verbessert und mit einfachen Mitteln die Mischstrecke 62 verlängert werden. Es ist klar, dass bei einer einfachen Ausführungsform die Mischkammer 14 auch ohne Führungswand 60, 61 und ohne Zwischenwand 63 auskommt.

Zweckmäßig ist das Mischgehäuse 14 gegenüber dem Inneren 23 des Hauptgehäuses 2 gasdicht ausgestaltet. In der Folge kann das Hauptgehäuse 2 aus preiswerteren Materialien hergestellt werden. Ferner können beim Hauptgehäuse 2 Leckagen toleriert werden, so dass auch die Herstellung des Hauptgehäuses 2 preiswerter realisierbar ist.

Bei den hier gezeigten Ausführungsformen besitzt das Mischgehäuse 14 einen Gehäusekörper 67. Der Gehäusekörper 67 weist die weiter oben bereits erwähnte Stirnseite 18 auf, die dem ersten Endboden 4 des Hauptgehäuses 2 zugewandt ist. Diese Stirnseite 18 weist nun den Einlass 16 und den Auslass 17 des Mischgehäuses 14 auf. Entsprechend den hier gezeigten, bevorzugten Ausführungsformen ist der Einlass 16 als Einlassstutzen ausgestaltet, der eine nicht näher bezeichnete Einlassöffnung des ersten Endbodens 4 des Hauptgehäuses 2 durchsetzt. Exemplarisch kann besagte Einlassöffnung mit einem nach außen abstehenden, ringförmig umlaufenden Kragen versehen sein. Analog dazu kann auch der Auslass 17 als Auslassstutzen ausgestaltet sein, der eine nicht näher bezeichnete Auslassöffnung des ersten Endbodens 4 des Hauptgehäuses 2 durchsetzt. Auch diese Auslassöffnung kann mit einem nach außen abstehenden, ringförmig umlaufenden Kragen versehen sein. Die Stutzen erstrecken sich bevorzugt parallel zueinander.

Der Gehäusekörper 67 kann vorzugsweise in Schalenbauweise konzipiert sein und gemäß den Darstellungen der Fig. 24-29 eine Oberschale 68 und eine Unterschale 69 aufweisen. Ferner kann als zusätzliches Bauteil eine die Stirnseite 18 bildende Stirnschale 70 vorgesehen sein. Durch die vorgeschlagene Bauweise lässt sich das Mischgehäuse 14 besonders preiswert herstellen und gasdicht ausführen.

Die hier gezeigte Abgasbehandlungseinrichtung 1 ist entsprechend den Fig. 17-23 sowie 24-29 mit mindestens einer Zumesseinrichtung 71 ausgestattet, mit deren Hilfe ein flüssiges Edukt, nämlich vorzugsweise ein Reduktionsmittel in die Mischkammer 15 eingebracht werden kann. Beispielsweise kann stromauf des SCR-Katalysators 22 Ammoniak bzw. Harnstoff bzw. eine wässrige Harnstofflösung der Abgasströmung zugemischt werden. Zweckmäßig ist die Zumesseinrichtung 71 hierzu so positioniert, dass die Einbringung des Reduktionsmittels quasi am Anfang der Mischstrecke 62 erfolgt. Vorzugsweise erfolgt die Positionierung der Zumesseinrichtung 71 derart, dass sie das Reduktionsmittel im Bereich des Einlasses 16 des Mischgehäuses 14 in die Mischkammer 15 einbringen kann. Die Zumesseinrichtung 71 ist zweckmäßig am ersten Endboden 4 angebracht, und zwar so, dass sie diesen ersten Endboden 4 sowie das Mischgehäuse 14 durchsetzt. Im Beispiel ist die Zumesseinrichtung 71 so positioniert, dass sie die Stirnseite 18 bzw. die Stirnschale 70 des Gehäusekörpers 68 durchdringt.

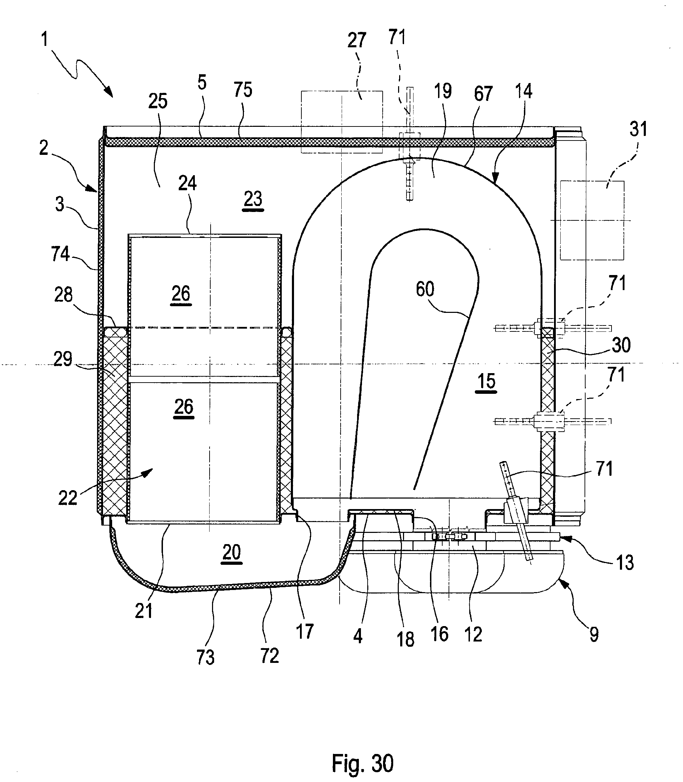

Grundsätzlich ist die Anordnung bzw. Positionierung der Zumesseinrichtung 71 bezüglich des Mischgehäuses 14 quasi beliebig wählbar. Fig. 30 zeigt daher exemplarisch weitere Positionen, die sich zur Anordnung einer solchen Zumesseinrichtung eignen.

Zur Realisierung der weiteren Umlenkkammer 20 kann am ersten Endboden 4 eine Umlenkschale 72 angebracht sein. Zusammen mit einem von der Umlenkschale 72 überdeckten Bereich des ersten Endbodens 4 begrenzt die Umlenkschale 72 die weitere Umlenkkammer 20. Entsprechend Fig. 1 ist diese Umlenkschale 72 so dimensioniert, dass sie den Auslass 17 des Mischgehäuses 14 sowie den jeweiligen Einlass 21 des jeweiligen SCR-Katalysators 22 überdeckt.

Die Umlenkschale 72 ist im Beispiel doppelwandig konzipiert, was zur Realisierung einer Luftspaltisolierung genutzt werden kann. Ebenso kann in die Doppelwand der Umlenkschale 72 ein thermisch isolierendes Isolationsmaterial 73 eingebracht sein. Der Mantel 3 des Hauptgehäuses 2 kann doppelwandig konzipiert sein. Dies kann zur Realisierung einer Luftspaltisolierung oder zum Einbringen eines thermisch isolierenden Isolationsmaterials 74 genutzt werden. Der zweite Endboden 5 kann doppelwandig konzipiert sein für eine Luftspaltisolierung oder für die Aufnahme eines thermisch isolierenden Isolationsmaterials 75.

Entsprechend Fig. 3 umfasst das Umlenkgehäuse 9 einen topfförmigen Schalenkörper 76 und einen Deckel oder Boden 77, zwischen denen die Umlenkkammer 10 begrenzt ist. Der Deckel oder Boden 77 weist den jeweiligen Einlass 11 und den jeweiligen Auslass 12 auf. Der Schalenkörper 76 ist im Beispiel der Fig. 3 doppelwandig konzipiert und kann dementsprechend eine Luftspaltisolierung oder wie hier einen Aufnahmeraum zur Unterbringung eines thermisch isolierenden Isolationsmaterials 78 bilden.

Entsprechend Fig. 3 sowie entsprechend den Fig. 24-29 kann alternativ oder zusätzlich zu der zuvor genannten Zumesseinrichtung 71 eine Zumesseinrichtung 79 oder weitere Zumesseinrichtung 79 vorgesehen sein, mit deren Hilfe ebenfalls ein flüssiges Edukt, insbesondere ein Reduktionsmittel, in die Abgasströmung eingebracht werden kann. Diese weitere Zumesseinrichtung ist hier am Umlenkgehäuse 9 angeordnet, und zwar derart, dass sie das jeweilige Edukt in Richtung zum Einlass 16 des Mischgehäuses 14 einbringen kann. In diesem Fall gehört die Zumesseinrichtung 79 zum Bauumfang des Umlenkgehäuses 9. Bei dieser Konfiguration wird zusätzlich die Wegstrecke bis zum Einlass 16 bzw. durch den Einlass 16 zur Mischkammer 15 bzw. zur Mischstrecke 62 hinzuaddiert, um diese nochmals zu verlängern.

## Patentansprüche

1. Abgasbehandlungseinrichtung für eine Abgasanlage einer Brennkraftmaschine, insbesondere eines Kraftfahrzeugs,
- mit einem Gehäuse (2), das einen seitlich umlaufenden Mantel (3) und zwei endseitige Endböden (4, 5) aufweist,
- wobei wenigstens ein Aufnahmerohr (6) vorgesehen ist, das den einen oder ersten Endboden (4) durchdringt und in dessen Auslassende (8) ein Partikelfilter (7) axial von außen eingesteckt ist,
- wobei das Partikelfilter (7) einen Mantel (41) aufweist, in dem wenigstens ein Partikelfilterelement (42) mittels einer Lagermatte (43) umhüllt und lagepositioniert ist,
- wobei ein Umlenkgehäuse (9) vorgesehen ist, das eine Umlenkkammer (10) enthält, das mindestens einen mit der Umlenkkammer (10) kommunizierenden Einlass (11) und mindestens einen mit der Umlenkkammer (10) kommunizierenden Auslass (12) aufweist,
- wobei mindestens eine Befestigungseinrichtung (13) zum lösbaren Befestigen des jeweiligen Einlasses (11) am jeweiligen Auslassende (8) des Aufnahmerohrs (6) vorgesehen ist,
- wobei das Aufnahmerohr (6) durch eine auslassseitige Verlängerung eines Mantels (48) eines Oxidationskatalysators (34) gebildet ist, der mindestens ein im Mantel (48) angeordnetes Oxidationskatalysatorelement (47) aufweist.

2. Abgasbehandlungseinrichtung nach Anspruch 1, **dadurch gekennzeichnet, dass** ein dem Umlenkgehäuse (9) zugewandter auslassseitiger Endabschnitt (35) des Partikelfilters (7) zum axialen Festlegen des Partikelfilters (7) am jeweiligen Aufnahmerohr (6) und/oder am jeweiligen Einlass (12) in die jeweilige Befestigungseinrichtung (13) eingebunden ist.

3. Abgasbehandlungseinrichtung nach einem der Ansprüche 1 bis 2, **dadurch gekennzeichnet, dass** die jeweilige Befestigungseinrichtung (13) als Schellenverbindung (52, 53) oder als geschraubte Flanschverbindung (58) ausgestaltet ist.

4. Abgasbehandlungseinrichtung nach einem der Ansprüche 1 bis 3, **dadurch gekennzeichnet,**
- **dass** die jeweilige Befestigungseinrichtung (13) einen am freien Ende des jeweiligen Einlasses (11) ausgebildeten ersten Befestigungsflansch (36) und einen am freien Auslassende (8) des jeweiligen Aufnahmerohrs (6) ausgebildeten zweiten Befestigungsflansch (37) aufweist,
- **dass** der auslassseitige Endabschnitt (35) des Partikelfilters (7) einen nach außen abstehenden segmentweise oder vollständig umlaufenden Bund (38) aufweist, der axial zwischen den Befestigungsflanschen (36, 37) angeordnet ist.

5. Abgasbehandlungseinrichtung nach Anspruch 4, **dadurch gekennzeichnet, dass** der Bund (38) am Mantel (41) des Partikelfilters (7) ausgebildet ist.

6. Abgasbehandlungseinrichtung nach Anspruch 4 oder 5, **dadurch gekennzeichnet,**
- **dass** der Bund (38) zwischen den Befestigungsflanschen (36, 37) axial verspannt ist, und/oder
- **dass** die Befestigungsflansche (36, 37) über eine Dichtung (39) aneinander oder über zwei Dichtungen (39) am Bund (38) axial abgestützt sind.

7. Abgasbehandlungseinrichtung nach einem der Ansprüche 1 bis 6, **dadurch gekennzeichnet, dass** ein einlassseitiger Endabschnitt (40) des Partikelfilters (7) axial verschiebbar am Aufnahmerohr (6) radial abgestützt ist.

8. Abgasbehandlungseinrichtung nach Anspruch 7, **dadurch gekennzeichnet,**
- **dass** der einlassseitige Endabschnitt (40) über einen am Partikelfilter (7) oder am Aufnahmerohr (6) befestigten segmentweise oder vollständig umlaufenden Lagerkörper (44) am Aufnahmerohr (6) abgestützt ist,
oder
- **dass** der einlassseitige Endabschnitt (40) eine segmentweise oder vollständig umlaufende Querschnittsaufweitung (45) aufweist, die direkt am Aufnahmerohr (6) abgestützt ist, oder dass das Aufnahmerohr (6) im Bereich des einlassseitigen Endabschnitts (40) eine segmentweise oder vollständig umlaufende Querschnittsverengung (46) aufweist, die direkt am Partikelfilter (7) abgestützt ist.

9. Abgasbehandlungseinrichtung nach einem der Ansprüche 1 bis 8, **dadurch gekennzeichnet, dass** im Gehäuse (2) ein Mischgehäuse (14) angeordnet ist, das eine Mischkammer (15), einen den ersten Endboden (4) durchsetzenden, mit der Mischkammer (15) kommunizierenden Einlass (16) und einen den ersten Endboden (4) durchsetzenden mit der Mischkammer (15) kommunizierenden Auslass (17) aufweist und das an einem vom ersten Endboden (4) entfernten Umlenkabschnitt (19) vom ersten Endboden (4) weiter entfernt ist als vom anderen oder zweiten Endboden (5).

10. Abgasbehandlungseinrichtung nach Anspruch 9, **dadurch gekennzeichnet, dass** im Mischgehäuse (14) zumindest eine Führungswand (60, 61) angeordnet ist, die in der Mischkammer (15) eine vom Einlass (16) über dem Umlenkabschnitt (19) zum Auslass (17) führende Mischstrecke (62) ausbildet.

11. Abgasbehandlungseinrichtung nach Anspruch 10, **dadurch gekennzeichnet, dass** im Mischgehäuse (14) eine Zwischenwand (63) angeordnet ist, die in der Mischkammer (15) zwei Ebenen voneinander trennt, in denen sich die Mischstrecke (62) erstreckt.

12. Abgasbehandlungseinrichtung nach einem der Ansprüche 9 bis 11, **dadurch gekennzeichnet,**
- **dass** eine durch das Mischgehäuse (14) geführte Abgasströmung vom Einlass (16) zum Auslass (17) um mehr als 180° oder um mindestens 540° umgelenkt wird,
und/oder
- **dass** der Einlass (16) des Mischgehäuses (14) mit einer gleichen oder mit einer anderen Befestigungseinrichtung (51) lösbar am Auslass (12) des Umlenkgehäuses (9) befestigt ist, und/oder
- **dass** außen am ersten Endboden (4) eine Umlenkschale (72) angebracht ist, die eine weitere Umlenkkammer (20) begrenzt, in welche der Auslass (17) des Mischgehäuses (14) einmündet und in welche mindestens ein den ersten Endboden (4) durchsetzender Einlass (21) wenigstens eines SCR-Katalysators (22) einmündet.

13. Abgasbehandlungseinrichtung nach einem der Ansprüche 9 bis 12, **dadurch gekennzeichnet, dass** zumindest eine Zumesseinrichtung (71, 79) zum Einbringen eines Reduktionsmittels in die Mischkammer (15) vorgesehen ist.

## Claims

1. An exhaust gas treatment system for an exhaust gas system of an internal combustion engine, in particular a motor vehicle,
- comprising a housing (2) with a laterally circulating shell (3) and two end-side end bottoms (4, 5),
- wherein at least one receiver pipe (6) is provided which penetrates through the one or first end bottom (4) and in the outlet end (8) of which a particle filter (7) is axially inserted from the outside,
- wherein the particle filter (7) has a shell (41), in which at least one particle filter element (42) is encased by means of a mounting mat (43) and is positioned therein,
- wherein a deflection housing (9) is provided that contains a deflection chamber (10) that has at least one inlet (11) in communication with the deflection chamber (10) and at least one outlet (12) in communication with the deflection chamber (10),
- wherein at least one fixing device (13) for detachably fixing the respective inlet (11) to the respective outlet (8) of the receiver pipe (6) is provided,
- wherein the receiver pipe (6) is formed by an outlet-side extension of a shell (48) of an oxidising catalytic convertor (34) that has at least one oxidising catalytic convertor element (47) provided in the shell (48).

2. The exhaust gas treatment device as claimed in claim 1, **characterized in that** an outlet-side end section (35) of the particle filter (7), which faces the deflection housing (9), is integrated in the respective fixing device (13) for axially fixing the particle filter (7) to the respective receiver pipe (6) and/or to the respective inlet (12).

3. The exhaust gas treatment device as claimed in any one of claims 1 to 2, **characterized in that** the respective fixing device (13) is designed as a clamp connection (52, 53) or as a screwed flange connection (58).

4. The exhaust gas treatment device as claimed in any one of claims 1 to 3, **characterized in that**
- the respective fixing device (13) has a first fixing flange (36) formed at the free end of the respective inlet (11) and a second fixing flange (37) formed at the free outlet end (8) of the respective receiver pipe (6),
- the outlet-side end section (35) of the particle filter (7) has a collar (38) that protrudes outwards and extends around either in segments or completely, which is provided axially between the fixing flanges (36, 37).

5. The exhaust gas treatment device as claimed in claim 4, **characterized in that** the collar (38) is formed on the shell (41) of the particle filter (7).

6. The exhaust gas treatment system as claimed in claim 4 or 5, **characterized in that**
- the collar (38) is axially clamped between the fixing flanges (36, 37),
and/or
- the fixing flanges (36, 37) are axially supported on each other via a seal (39) or on the collar (38) via two seals (39).

7. The exhaust gas treatment system as claimed in any one of claims 1 to 6, **characterized in that** an inlet-side end section (40) of the particle filter (7) is radially supported in an axially displaceable manner on the receiver pipe (6).

8. The exhaust gas treatment system as claimed in claim 7, **characterized in that**
- the inlet-side end section (40) is supported on the receiver pipe (6) via a support body (44) that is fixed to the particle filter (7) or on the receiver pipe (6) and extends around either in segments or completely,
or
- the inlet-side end section (40) has a cross-sectional widening (45) that extends around in segments or completely, which is directly supported on the receiver pipe (6), or **in that** the receiver pipe (6) has, in the region of the inlet-side end section (40), a cross-sectional narrowing (46) that extends around either in segments or completely, which is directly supported on the particle filter (7).

9. The exhaust gas treatment system as claimed in any one of claims 1 to 8,
**characterized in that** a mixing housing (14) is provided in the housing (2), which has a mixing chamber (15), an inlet (16) that penetrates through the first end bottom (4) and is in communication with the mixing chamber (15), and an outlet (17) that penetrates through the first end bottom (4) and is in communication with the mixing chamber (15), and the deflection section (19) removed from the first end bottom (4) is removed from the first end bottom (4) further than from the other or second end bottom (5).

10. The exhaust gas treatment system as claimed in claim 9, **characterized in that** at least one guiding wall (60, 61) is provided in the mixing housing (14), which forms in the mixing chamber (15) a mixing section (62) that extends from the inlet (16) via the deflection section (19) to the outlet (17).

11. The exhaust gas treatment system as claimed in claim 10, **characterized in that** an intermediate wall (63) is provided in the mixing housing (14), which separates two planes from each other in the mixing chamber (15), in which the mixing section (62) extends.

12. The exhaust gas treatment system as claimed in any one of claims 9 to 11,
**characterized in that**
- an exhaust gas flow passed through the mixing housing (14) is deflected from the inlet (16) to the outlet (17) by more than 180° or by at least 540°,
and/or
- the inlet (16) of the mixing housing (14) is detachably fixed to the outlet (12) of the deflection housing (9) using a same or a different fixing unit (51), and/or - a deflection tray (72) is fixed on the outside to the first end bottom (4), which tray delimits a further deflection chamber (20), into which the outlet (17) of the mixing housing (14) opens and into which at least one inlet (21) of at least one SCR catalytic convertor (22) opens, which penetrates through the first end bottom (4).

13. The exhaust gas treatment system as claimed in any one of claims 9 to 12,
**characterized in that** at least one dosing unit (71, 79) for introducing a reducing agent into the mixing chamber (15) is provided.

## Revendications

1. Dispositif de traitement de gaz d'échappement pour une installation de gaz d'échappement d'un moteur à combustion interne, en particulier d'un véhicule automobile,
- comprenant un carter (2), qui présente une enveloppe (3) périphérique latéralement et deux fonds d'extrémité (4, 5) situés côté extrémité,
- au moins un tuyau d'admission (6) étant prévu, lequel traverse un des premiers fonds d'extrémité (4) et dans l'extrémité de sortie (8) duquel un filtre à particules (7) est emboîté axialement depuis l'extérieur,
- le filtre à particules (7) présentant une enveloppe (41), qui habille au moins un élément de filtre à particules (42) au moyen d'un mat de support (43) et qui est positionnée dans un emplacement,
- un carter de déviation (9) étant prévu, lequel contient une chambre de déviation (10), qui présente au moins une entrée (11) communiquant avec la chambre de déviation (10) et au moins une sortie (12) communiquant avec la chambre de déviation (10),
- au moins un dispositif de fixation (13) étant prévu afin de fixer de manière amovible l'entrée (11) respective au niveau de l'extrémité de sortie (8) respective du tuyau d'admission (6),
- le tuyau d'admission (6) étant formé par un prolongement côté sortie d'une enveloppe (48) d'un catalyseur à oxydation (34), qui présente au moins un élément de catalyseur à oxydation (47) disposé dans l'enveloppe (48).

2. Dispositif de traitement de gaz d'échappement selon la revendication 1, **caractérisé en ce qu'**une section d'extrémité (35), côté sortie tournée vers le carter de déviation (9), du filtre à particules (7), servant à immobiliser de manière axiale le filtre à particules (7) au niveau du tuyau d'admission (6) respectif et/ou au niveau de l'entrée (12) respective est intégrée dans le dispositif de fixation (13) respectif.

3. Dispositif de traitement de gaz d'échappement selon l'une quelconque des revendications 1 à 2, **caractérisé en ce que** le dispositif de fixation (13) respectif est configuré sous la forme d'un système d'assemblage à colliers (52, 53) ou sous la forme d'un système d'assemblage à brides (58) vissé.

4. Dispositif de traitement de gaz selon l'une quelconque des revendications 1 à 3, **caractérisé en ce**
- **que** le dispositif de fixation (13) respectif présente une première bride de fixation (36) réalisée au niveau de l'extrémité libre de l'entrée (11) respective et une deuxième bride de fixation (37) réalisée au niveau de l'extrémité de sortie (8) libre du tuyau d'admission (6) respectif,
- en ce que la section d'extrémité (35) côté sortie du filtre à particules (7) présente un collet (38) périphérique par segments ou en totalité faisant saillie vers l'extérieur, lequel est disposé de manière axiale entre les brides de fixation (36, 37).

5. Dispositif de traitement de gaz d'échappement selon la revendication 4, **caractérisé en ce que** le collet (38) est réalisé au niveau de l'enveloppe (41) du filtre à particules (7).

6. Dispositif de traitement de gaz d'échappement selon la revendication 4 ou 5, **caractérisé en ce**
- **que** le collet (38) est tendu de manière axiale entre les brides de fixation (36, 37),
et/ou
- en ce que les brides de fixation (36, 37) prennent appui de manière axiale par l'intermédiaire d'un joint d'étanchéité (39) les unes contre les autres ou par l'intermédiaire de deux joints d'étanchéité (39), au niveau du collet (38).

7. Dispositif de traitement de gaz d'échappement selon l'une quelconque des revendications 1 à 6, **caractérisé en ce qu'**une section d'extrémité (40) côté entrée du filtre à particules (7) prend appui de manière radiale au niveau du tuyau d'admission (6) de manière à pouvoir être déplacée par un coulissement axial.

8. Dispositif de traitement de gaz d'échappement selon la revendication 7, **caractérisé en ce**
- **que** la section d'extrémité (40) côté entrée prend appui au niveau du tuyau d'admission (6) par l'intermédiaire d'un corps de support (44) périphérique par segments ou en totalité fixé au niveau du filtre à particules (7) ou au niveau du tuyau d'admission (6),
ou
- en ce que la section d'extrémité (40) côté entrée présente un élargissement de section transversale (45) périphérique par segments ou en totalité, lequel prend appui directement au niveau du tuyau d'admission (6), ou en ce que le tuyau d'admission (6) présente, dans la zone de la section d'extrémité (40) côté entrée, un rétrécissement de section transversale (46) périphérique par segments ou en totalité, lequel prend appui directement au niveau du filtre à particules (7).

9. Dispositif de traitement de gaz d'échappement selon l'une quelconque des revendications 1 à 8, **caractérisé en ce qu'**est disposé, dans le carter (2), un carter de mélange (14), qui présente une chambre de mélange (15), une entrée (16) traversant le premier fond d'extrémité (4), communiquant avec la chambre de mélange (15) et une sortie (17) traversant le premier fond d'extrémité (4) et communiquant avec la chambre de mélange (15), et lequel est davantage éloigné, au niveau d'une section de déviation (19) éloignée du premier fond d'extrémité (4), du premier fond d'extrémité (4) que l'autre ou que le deuxième fond d'extrémité (5).

10. Dispositif de traitement de gaz d'échappement selon la revendication 9, **caractérisé en ce qu'**est disposée dans le carter de mélange (14) au moins une paroi de guidage (60, 61), qui réalise, dans la chambre de mélange (15), un parcours de mélange (62) menant depuis l'entrée (16) jusqu'à la sortie (17) en passant par la section de déviation (19).

11. Dispositif de traitement de gaz d'échappement selon la revendication 10, **caractérisé en ce qu'**est disposée dans le carter de mélange (14) une paroi intermédiaire (63), qui sépare, dans la chambre de mélange (15), l'un de l'autre deux niveaux, dans lesquels le parcours de mélange (62) s'étend.

12. Dispositif de traitement de gaz d'échappement selon l'une quelconque des revendications 9 à 11, **caractérisé en ce**
- **qu'**un écoulement de gaz d'échappement guidé à travers le carter de mélange (14) est dévié depuis l'entrée (16) en direction de la sortie (17) de plus de 180° ou d'au moins 540°, et/ou
- en ce que l'entrée (16) du carter de mélange (14) est fixée par un même dispositif de fixation ou par un autre dispositif de fixation (51), de manière amovible au niveau de la sortie (12) du carter de déviation (9), et/ou - en ce qu'une coque de déviation (72) est installée côté extérieur au niveau du premier fond d'extrémité (4), laquelle délimite une chambre de déviation (20) supplémentaire, dans laquelle la sortie (17) du carter de mélange (14) débouche côté entrée et dans laquelle débouche côté entrée au moins une entrée (21), traversant le premier fond d'extrémité (4), au moins d'un catalyseur de type SCR (à réduction catalytique sélective) (22).

13. Dispositif de traitement de gaz d'échappement selon l'une quelconque des revendications 9 à 12, **caractérisé en ce qu'**au moins un dispositif de dosage (71, 79) servant à introduire un agent de réduction est prévu dans la chambre de mélange (15).
